# FASCICULE DE BREVET EUROPEEN

(11) **EP 3 450 901 B1**
(45) Date de publication et mention de la délivrance du brevet: **18.03.2020**
(21) Numéro de dépôt: 18190956.5
(22) Date de dépôt: 27.08.2018
(51) Int. Cl.: F41A 23/06, F16M 11/20, F41A 23/16, F41A 27/12

(54) **ARTICULATION À POSITIONNEMENT ANGULAIRE RÉGLABLE**
GELENK MIT REGULIERBARER WINKELPOSITIONIERUNG
ADJUSTABLE ANGULAR POSITIONING JOINT

(30) Priorité: 04.09.2017 FR 1700890
(43) Date de publication de la demande: 06.03.2019
(73) Titulaire: NEXTER Systems, 42328 Roanne Cedex (FR)
(72) Inventeur: CHAPUIS, Pierrick, 18023 Bourges (FR)
(74) Mandataire: Cabinet Chaillot

(56) Documents cités:
- FR-A- 993 321
- US-A- 4 614 452
- US-A1- 2011 297 196

## Description

Le domaine technique de l'invention est celui des articulations entre deux organes dont le positionnement angulaire relatif peut être modifié.

Il est connu de sécuriser le positionnement relatif de deux organes, par exemple des bras pivotants, à l'aide de disques dentés.

Le brevet US7452088 décrit ainsi une articulation pour un rétroviseur automobile dont une partie fixe porte un disque denté et une partie mobile un autre disque denté. Cette articulation est conçue pour n'avoir que deux positions prédéfinies : une position repliée et une position déployée. La modification de l'orientation angulaire du rétroviseur en position déployée se fait en dévissant une vis axiale ce qui permet de relâcher les efforts d'un ressort de compression qui rapproche les disques dentés l'un de l'autre.

Un tel dispositif est de mise en œuvre complexe car il ne permet pas de modifier aisément l'orientation angulaire d'un organe par rapport à l'autre.

On connait également par le brevet FR993321 un dispositif de verrouillage pour dossier de chaise comportant un volant de manœuvre engagé sur un axe fileté. La rotation du volant sur son axe entraîne le déplacement d'un premier disque denté par rapport à un deuxième disque denté contre l'action d'un ressort. Ce dispositif impose d'effectuer de nombreux tours de rotation du volant pour permettre le verrouillage.

On connait également par le brevet US2011/0297196 un moyen de verrouillage pour parasol comportant un bouton rotatif portant des profils de came permettant de rapprocher les disques dentés. Une telle solution implique des frottements importants et entraîne la fabrication de pièces de formes complexes.

On connaît enfin par le brevet US4614452 un mécanisme de verrouillage qui combine un écrou permettant de rapprocher les disques dentés et un levier assurant le verrouillage final. Un tel dispositif n'est guère aisé à manœuvrer rapidement. En outre il nécessite également de nombreux tours de rotation pour assurer le pré-serrage et le coût de fabrication des différentes pièces est important.

C'est le but de l'invention que de proposer une articulation permettant de verrouiller de façon simple et rapide les deux organes pivotant dans différentes positions angulaires l'un par rapport à l'autre.

L'invention trouve plus particulièrement application dans le verrouillage d'un montage de bras pivotants supportant une arme légère.

Ainsi l'invention a pour objet une articulation à positionnement angulaire réglable autour d'un axe entre un premier organe et un deuxième organe, articulation comportant au moins un premier disque denté solidaire en rotation du premier organe et au moins un deuxième disque denté solidaire en rotation du deuxième organe, les disques étant positionnés l'un par rapport à l'autre de façon à pouvoir coopérer entre eux par engagement de leurs dentures de façon à verrouiller angulairement un organe par rapport à l'autre, un premier ressort de compression étant disposé entre les disques de façon à les écarter l'un de l'autre, articulation comportant une douille de verrouillage positionnée au-dessus d'un des disques et pivotante autour de l'axe, des moyens d'entraînement étant prévus entre la douille et l'axe de telle sorte que le pivotement de la douille entraîne le déplacement axial de celle-ci et la poussée d'un disque vers l'autre disque contre l'action du premier ressort, articulation caractérisée en ce que les moyens d'entraînement comprennent au moins une première rainure hélicoïdale portée par l'axe et dans laquelle circule une goupille radiale solidaire de la douille, la rotation de la douille faisant déplacer la goupille dans la première rainure et provoquant le déplacement axial de la douille.

Avantageusement, la douille pourra être pivotée par un bouton qui comportera un pion radial traversant la douille et engagé dans une deuxième rainure hélicoïdale de l'axe.

Selon un mode particulier de réalisation, un deuxième ressort de compression pourra être disposé entre le bouton et la douille et la deuxième rainure hélicoïdale se terminera par une rainure axiale, la douille comportant par ailleurs une boutonnière axiale permettant la remontée du bouton par l'action du deuxième ressort à l'issue du déplacement de la douille, la douille et l'axe se trouvant alors solidarisés en rotation par le pion radial.

Avantageusement, la ou les rainures hélicoïdales auront un pas tel que le verrouillage des disques sera assuré par une rotation de la douille d'un angle compris entre 30° et 60° .

L'invention sera mieux comprise à la lecture de la description qui va suivre d'un mode particulier de réalisation, description faite en référence aux figures annexées et dans lesquelles :
- La figure 1 est une vue de dessus schématique d'un véhicule blindé équipé d'un armement secondaire comportant au moins une articulation conforme à l'invention ;
- La figure 2 est une vue éclatée et en perspective d'un mode de réalisation d'une articulation selon l'invention ;
- Les figures 3a et 3b sont des vues en coupe de cette articulation, la figure 3a montrant l'articulation en position déverrouillée et la figure 3b en position verrouillée.

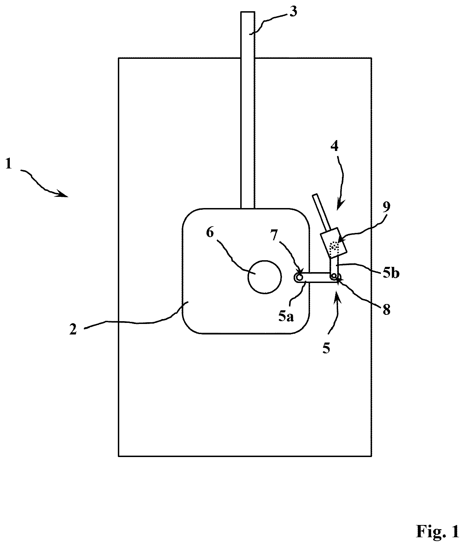

En se reportant à la figure 1, un véhicule blindé 1 est représenté en vue de dessus. Ce véhicule comporte une tourelle 2 portant un armement principal 3 constitué par un canon. La tourelle 2 porte aussi un armement secondaire 4 constitué par une arme de petit calibre (calibre compris entre 5,56 mm et 15mm) qui est fixée sur un montage orientable 5 comprenant deux bras 5a et 5b. Ce montage 5 est fixé à la tourelle 2 au voisinage d'une trappe 6 et comprend une première articulation 7 entre le premier bras 5a et la tourelle 2 et une deuxième articulation 8 entre le premier bras 5a et le deuxième bras 5b.

Une troisième articulation 9 est interposée entre l'arme 4 et le deuxième bras 5b.

Le montage 5 et ses articulations 7,8 et 9 permet à un utilisateur (non représenté), dont le torse sort du véhicule par la trappe 6, d'orienter l'armement secondaire 4 suivant toute direction.

Il est cependant nécessaire, une fois une orientation adoptée pour les bras 5a et 5b, de verrouiller l'ensemble pour faciliter le tir.

Le verrouillage comme le déverrouillage doivent pouvoir se faire très rapidement et d'une seule main.

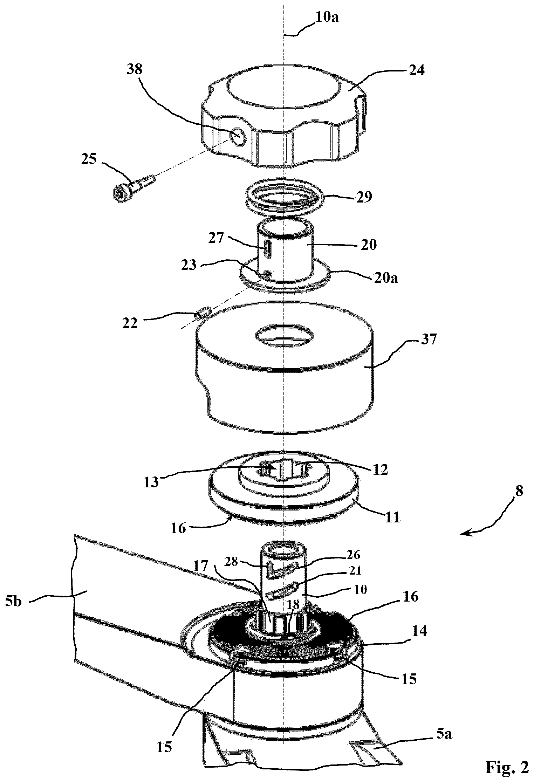

La figure 2 montre, en perspective et de façon éclatée, un exemple d'articulation selon l'invention. Ici l'articulation représentée est l'articulation 8 entre les deux bras 5a et 5b. Il est aisé de définir les autres articulations en adaptant les moyens de l'invention.

L'articulation 8 permet d'assurer un positionnement angulaire réglable entre un premier organe qui est ici le premier bras 5a et un deuxième organe qui est ici le deuxième bras 5b, positionnement autour d'un axe 10, sensiblement cylindrique et ayant un axe de symétrie 10a.

Cette articulation 8 comporte un premier disque denté 11 qui est solidaire en rotation du premier bras 5a. La solidarisation en rotation est assurée par un profil rainuré 12 réalisé dans un alésage 13 du premier disque 11, et coopérant avec un profil complémentaire 17 aménagé sur l'axe 10.

Si le premier disque 11 est solidaire en rotation du premier bras 5a, il est mobile en translation le long de l'axe 10, le profil rainuré 12 pouvant glisser dans le profil complémentaire 17.

L'articulation 8 comporte aussi un deuxième disque denté 14 qui est solidaire en rotation du deuxième bras 5b. Ici la solidarisation est assurée par des vis 15 liant le deuxième disque 14 au deuxième bras 5b.

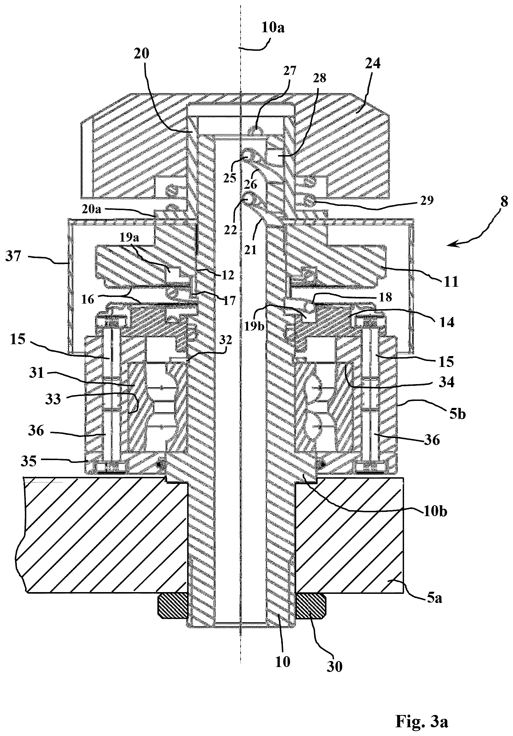

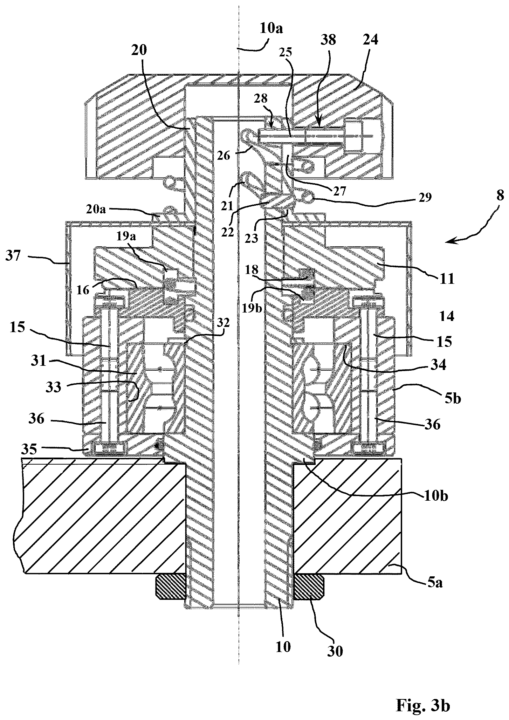

Comme on le voit sur les figures 3a et 3b, l'axe 10 est rendu solidaire du premier bras 5a par un écrou à encoches 30 et une clavette (non représentée) ou un profil cannelé. L'axe 10 porte une collerette 10b sur laquelle se positionne la bague intérieure d'un roulement 31 qui est lié à l'axe 10 par un anneau élastique 32.

La bague extérieure du roulement 31 est positionnée dans un alésage 33 du deuxième bras 5b en appui contre un lamage 34 de cet alésage. La solidarisation du deuxième bras 5b et du roulement est complétée par une plaquette 35 fixée au deuxième bras 5b par des vis 36.

Comme on le voit sur la figure 2, et d'une façon classique, chaque disque 11 et 14 porte des dents radiales 16 ayant des profils complémentaires (triangulaires par exemple). Les dents 16 portées par le premier disque 11 sont disposées en regard des dents 16 portées par le deuxième disque 14. Ces dents 16 sont destinées à s'engager les unes dans les autres pour assurer un verrouillage angulaire d'un bras par rapport à l'autre.

Selon l'invention un premier ressort de compression 18 est disposé entre les disques 11 et 14 et il a pour fonction de les écarter l'un de l'autre. Ce premier ressort 18 est disposé dans des gorges annulaires 19a et 19b aménagées respectivement sur le premier disque 11 et sur le deuxième disque 14 (voir la figure 3a).

Par ailleurs une douille de verrouillage 20 est positionnée au-dessus d'un disque (ici le premier disque 11 qui est mobile en translation).

Cette douille 20 est montée pivotante autour de l'axe 10, et des moyens d'entraînement sont prévus entre la douille 20 et l'axe 10 de telle sorte que le pivotement de la douille 20 entraîne le déplacement axial de celle-ci et la poussée d'un disque vers l'autre disque, contre l'action du premier ressort 18.

Conformément à ce mode de réalisation, les moyens d'entraînement comprennent au moins une première rainure hélicoïdale 21 qui est portée par l'axe 10 et dans laquelle circule une goupille radiale 22 solidaire de la douille 20.

Comme on le voit à la figure 2, la goupille radiale 22 est introduite dans un trou radial 23 porté par la douille 20 et elle est destinée à se positionner dans la première rainure hélicoïdale 21.

La figure 3a montre l'assemblage en position déverrouillée. Ainsi lorsque l'on entraîne la douille 20 en rotation autour de l'axe 10, la goupille 22 qui suit la première rainure hélicoïdale 21 pousse axialement la douille 20 vers le premier disque 11, comprimant ainsi le premier ressort 18. La figure 3b montre l'articulation une fois verrouillée.

Comme on le voit sur les figures, la douille 20 peut être pivotée par un bouton 24 qui comporte un pion radial 25, traversant la douille 20, et engagé dans une deuxième rainure hélicoïdale 26 portée par l'axe 20.

Le pion radial 25 est ici formé par une vis dont le filetage coopère avec un taraudage 38 du bouton 24 (figure 3b) .

Le bouton 24 facilite la commande du pivotement de la douille 20. La deuxième rainure 26 est bien sûr parallèle à la première rainure 21 pour éviter tout blocage (voir figure 2) .

On remarque sur la figure 2 que la douille 20 comporte une boutonnière 27 s'étendant suivant une direction axiale de la douille 20. Par ailleurs la deuxième rainure hélicoïdale 26 se termine par une rainure 28 orientée suivant une direction axiale de l'axe 10. Enfin un deuxième ressort de compression 29 est disposé entre le bouton 24 et la douille 20. Ce ressort prend appui sur une collerette 20a de la douille 20.

Le bouton 24 n'est lié à la douille 20 que par le pion radial 25. Ainsi, lorsque le serrage des disques 11 et 14 est réalisé, le pion 25 se trouve en regard de la rainure axiale 28. Le deuxième ressort 29 pousse le bouton 24 de façon à l'éloigner de la collerette 20a de la douille 20. Ce déplacement du bouton 24 est rendu possible par la présence de la boutonnière 27 qui, à l'issue du serrage, se trouve positionnée en regard de la rainure axiale 28 (figure 3b).

Le bouton 24 remonte ainsi par l'action du deuxième ressort 29 à l'issue du pivotement de la douille 20. Il en résulte une solidarisation en rotation de la douille 20 et de l'axe 10 par le pion radial 25. Par ailleurs le bouton 24 qui est solidaire de la douille 20 ne peut plus pivoter.

On sécurise ainsi le verrouillage de l'articulation.

Lorsque l'utilisateur souhaite déverrouiller l'articulation, il lui suffit d'enfoncer tout d'abord le bouton 24. Ce mouvement positionne le pion 25 à l'entrée de la deuxième rainure 26, donc déverrouille la douille 20. Il est alors possible de faire tourner le bouton en sens inverse de celui adopté pour le verrouillage pour écarter les disques dentés.

La ou les rainures hélicoïdales 21 et 26 seront définies avec un pas tel que le verrouillage des disques 11 et 14 sera assuré par une rotation de la douille 20 d'un angle compris entre 30° et 60°. Une telle disposition permet d'assurer un verrouillage manuel rapide.

On remarque sur les figures qu'un capot de protection 37 est interposé entre la douille 20 et le premier disque 11. Ce capot est avantageusement collé ou clipsé au premier disque 11. Il assure la protection des disques contre l'humidité et les poussières ou grains de sable. Le capot 37, qui est solidaire du premier bras 5a, est échancré pour permettre le débattement du deuxième bras 5b.

L'invention a été décrite ici dans une application à une articulation entre deux bras d'un support d'armement. Il est bien entendu possible de la mettre en œuvre pour des articulations entre deux organes de formes diverses, par exemple des éléments de rétroviseur ou des pièces d'ameublement.

On a décrit des moyens d'entraînement comprenant une rainure hélicoïdale coopérant avec une goupille. Selon un mode de réalisation qui ne fait pas partie de l'invention, il est également possible de définir des moyens d'entraînement différents, par exemple un filetage porté par l'axe 10 et coopérant avec un taraudage complémentaire porté par la douille 20. L'avantage de la solution décrite précédemment est qu'elle permet la mise en place d'un verrouillage de la douille et de l'axe à l'issue du serrage par la coopération d'un pion avec une rainure axiale et une boutonnière.

## Revendications

1. Articulation (8) à positionnement angulaire réglable autour d'un axe (10) entre un premier organe (5a) et un deuxième organe (5b), articulation comportant au moins un premier disque denté (11) solidaire en rotation du premier organe (5a) et au moins un deuxième disque denté (14) solidaire en rotation du deuxième organe (5b), les disques (11, 14) étant positionnés l'un par rapport à l'autre de façon à pouvoir coopérer entre eux par engagement de leurs dentures (16) de façon à verrouiller angulairement un organe par rapport à l'autre, un premier ressort de compression (18) étant disposé entre les disques (11,14) de façon à les écarter l'un de l'autre, articulation comportant une douille de verrouillage (20) positionnée au-dessus d'un des disques et pivotante autour de l'axe (10), des moyens d'entraînement (21, 22) étant prévus entre la douille (20) et l'axe (10) de telle sorte que le pivotement de la douille (20) entraîne le déplacement axial de celle-ci et la poussée d'un disque (11) vers l'autre disque (14) contre l'action du premier ressort (18), articulation ***caractérisée en ce que*** les moyens d'entraînement comprennent au moins une première rainure hélicoïdale (21) portée par l'axe (10) et dans laquelle circule une goupille radiale (22) solidaire de la douille (20), la rotation de la douille (20) faisant déplacer la goupille (22) dans la première rainure (21) et provoquant le déplacement axial de la douille (20).

2. Articulation à positionnement angulaire réglable selon la revendication 1, **caractérisée en ce que** la douille (20) peut être pivotée par un bouton (24) qui comporte un pion radial (25) traversant la douille (20) et engagé dans une deuxième rainure hélicoïdale (26) de l'axe (10).

3. Articulation à positionnement angulaire réglable selon la revendication 2, **caractérisée en ce qu'**un deuxième ressort de compression (29) est disposé entre le bouton (24) et la douille (20) et **en ce que** la deuxième rainure hélicoïdale (26) se termine par une rainure axiale (28), la douille (20) comportant par ailleurs une boutonnière axiale (27) permettant la remontée du bouton (24) par l'action du deuxième ressort (29) à l'issue du déplacement de la douille (20), la douille (20) et l'axe (10) se trouvant alors solidarisés en rotation par le pion radial (25).

4. Articulation à positionnement angulaire réglable selon une des revendications 1 à 3, **caractérisée en ce que** la ou les rainures hélicoïdales (21,26) ont un pas tel que le verrouillage des disques (11,14) est assuré par une rotation de la douille (20) d'un angle compris entre 30° et 60°.

## Patentansprüche

1. Gelenk (8) mit regulierbarer Winkelpositionierung um eine Achse (10) zwischen einem ersten Organ (5a) und einem zweiten Organ (5b), wobei das Gelenk mindestens eine erste gezahnte Scheibe (11), die mit dem ersten Organ (5a) rotatorisch fest verbunden ist, und mindestens eine zweite gezahnte Scheibe (14), die mit dem zweiten Organ (5b) rotatorisch fest verbunden ist, aufweist, wobei die Scheiben (11, 14) in Bezug zueinander derart positioniert sind, dass sie durch Eingriff ihrer Zahnungen (16) derart zusammenwirken können, dass ein Organ in Bezug auf das andere winklig verriegelt wird, wobei eine erste Druckfeder (18) derart zwischen den Scheiben (11, 14) angeordnet ist, dass sie voneinander beabstandet werden, wobei das Gelenk eine Verriegelungshülse (20) aufweist, die über einer der Scheiben und um die Achse (10) schwenkend positioniert ist, wobei Antriebsmittel (21, 22) zwischen der Hülse (20) und der Achse (10) derart vorgesehen sind, dass das Schwenken der Hülse (20) zu der axialen Verlagerung derselben und dem Schieben einer Scheibe (11) zu der anderen Scheibe (14) gegen das Wirken der ersten Feder (18) führt, wobei das Gelenk **dadurch gekennzeichnet ist, dass** die Antriebsmittel mindestens eine erste schraubenförmige Rille (21), getragen durch die Achse (10) und in welcher ein radialer Stift (22) zirkuliert, der mit der Hülse (20) fest verbunden ist, umfassen, wobei die Rotation der Hülse (20) die Verlagerung des Bolzens (22) in der ersten Rille (21) bewirkt und zu der axialen Verlagerung der Hülse (20) führt.

2. Gelenk mit regulierbarer Winkelpositionierung nach Anspruch 1, **dadurch gekennzeichnet ist, dass** die Hülse (20) durch einen Knopf (24) schwenkbar ist, der einen radialen Stift (25) aufweist, der die Hülse (20) durchquert und in eine zweite schraubenförmige Rille (26) der Achse (10) eingreift.

3. Gelenk mit regulierbarer Winkelpositionierung nach Anspruch 2, **dadurch gekennzeichnet, dass** eine zweite Druckfeder (29) zwischen dem Knopf (24) und der Hülse (20) angeordnet ist und dass die zweite schraubenförmige Rille (26) in einer axialen Rille (28) endet, wobei die Hülse (20) im Übrigen eine axiale Knopfleiste (27) aufweist, welche den Anstieg des Knopfs (24) durch die Wirkung der zweiten Feder (29) bei Abschluss der Verlagerung der Hülse (20) erlaubt, wobei die Hülse (20) und die Achse (10) dann durch den radialen Stift (25) rotatorisch fest verbunden sind.

4. Gelenk mit regulierbarer Winkelpositionierung nach einem der Ansprüche 1 bis 3, **dadurch gekennzeichnet ist, dass** die schraubenförmige/n Rille/n (21, 26) eine Steigung hat/haben, die derart ist, dass die Verriegelung der Scheiben (11, 14) durch eine Rotation der Hülse (20) in einem Winkel zwischen 30° und 60° gewährleistet ist.

## Claims

1. A joint (8) with adjustable angular positioning around a spindle (10) between a first member (5a) and a second member (5b), the joint including at least one first toothed disc (11) secured in rotation with the first member (5a) and at least one second toothed disc (14) secured in rotation with the second member (5b), the discs (11, 14) being positioned relative to one another so as to cooperate with one another by engagement of their toothings (16) so as to angularly lock one member relative to the other, a first compression spring (18) being arranged between the discs (11, 14) so as to separate them from one another, the articulation including a locking sleeve (20) positioned above one of the discs and pivoting around the spindle (10), drive means (21, 22) being provided between the sleeve (20) and the spindle (10) such that the pivoting of the sleeve (20) drives the axial movement thereof and the pushing of one disc (11) toward the other disc (14) against the action of the first spring (18), the joint being **characterised in that** the drive means comprise at least one first helical groove (21) carried by the spindle (10) and in which circulates a radial pin (22) that is secured to the sleeve (20), the rotation of the sleeve (20) causing the pin (22) to move in the first groove (21) and causing the axial movement of the sleeve (20).

2. The adjustable angular positioning joint according to claim 1, **characterised in that** the sleeve (20) can be pivoted by a knob (24) that includes a radial pin (25) passing through the sleeve (20) and engaged in a second helical groove (26) of the spindle (10).

3. The adjustable angular positioning joint according to claim 2, **characterised in that** a second compression spring (29) is arranged between the knob (24) and the sleeve (20) and **in that** the second helical groove (26) ends with an axial groove (28), the sleeve (20) further including an axial keyhole (27) allowing the knob (24) to rise through the action of the second spring (29) at the end of the movement of the sleeve (20), the sleeve (20) and the spindle (10) then being secured in rotation by the radial pin (25).

4. The adjustable angular positioning joint according to one of claims 1 to 3, **characterised in that** the one or more helical grooves (21, 26) have such a pitch that the locking of the discs (11, 14) is ensured by a rotation of the sleeve (20) by an angle of between 30° and 60°.
